# EUROPEAN PATENT SPECIFICATION

(11) **EP 1 163 216 B1**
(45) Date of publication and mention of the grant of the patent: **21.01.2004**
(21) Application number: 99957772.9
(22) Date of filing: 29.11.1999
(51) Int. Cl.: C07C 407/00, C07C 409/38, C07C 409/24, C07F 11/00

(54) **PREPARATION OF PEROXY AND PEROXYESTER TUNGSTEN DERIVATIVES**
HERSTELLUNG VON PEROXY- UND PEROXYESTER-WOLFRAMDERIVATEN
PREPARATION DE DERIVES PEROXY ET PEROXYESTER DE TUNGSTENE

(30) Priority: 30.11.1998 AU PP742298
(43) Date of publication of application: 19.12.2001
(73) Proprietor: Sustainable Technologies Australia Limited, Queanbeyan, NSW 2620 (AU); Jenkins, Susan Marie, North Balwyn, VIC 3104 (AU)
(72) Inventor: JENKINS, Susan, Marie, North Balwyn, VIC 3104 (AU); KOPLICK, Andrew, Joseph, Ringwood East, VIC 3135 (AU)
(74) Representative: Manitz, Finsterwald & Partner GbR
(86) International application number: PCT/AU1999/001058
(87) International publication number: WO 2000/032571

(56) References cited:
- US-A- 5 252 354
- US-A- 5 277 986
- US-A- 5 457 218
- US-A- 5 772 978
- US-A- 5 911 965
- YEBKA B ET AL: "Electrochemical Li+-Insertion in WO3-xTiO2 mixed oxides" SOLID STATE IONICS, NORTH HOLLAND PUB. COMPANY. AMSTERDAM, NL, vol. 104, no. 3-4, 11 December 1997 (1997-12-11), pages 169-175, XP004126227 ISSN: 0167-2738

## Description

### TECHNICAL FIELD

This invention relates to methods of converting hydrated tungsten oxides, to peroxy and peroxyester tungsten derivatives and to methods of making alcoholic solutions containing these metal derivatives. The invention also relates to methods of producing tungsten oxides from these solutions that are useful as coatings on glass surfaces in displays, solar control windows and light modulators. Further, this invention relates to the peroxy and peroxyester tungsten derivatives, to the coatings and to the devices employing such coatings

The peroxy and peroxyester tungsten derivatives are useful and important precursors in the production of nanocrystalline tungsten oxide coatings. They are relatively inexpensive to produce and these colloidal dispersions incorporate only a small percentage of organic material that helps to avoid contamination of the inorganic metal oxide layers with extraneous impurities after firing. High quality tungsten oxide coatings from these derivatives can be formed at relatively low firing temperatures.

### BACKGROUND TO THE INVENTION

Peroxy and peroxyester tungsten derivatives have been investigated for their use in coating glass surfaces with metal oxides as alternative precursors.

Competitive materials such as metal alkoxides, metal chlorides and colloidal metal oxides all have some disadvantages related to the cost of production, incorporation of organic or inorganic impurities in the final metal oxide layer and, most importantly, solution instability. Solution instability manifests as an increase in viscosity and appearance of insoluble precipitates, rendering the solution unsuitable for application by dip-coating, spraying or spin-coating. A further advantage of peroxy or peroxyester metal derivatives is that stable solutions of concentrations between 0.5 to 1.0 molar are relatively easy to prepare thus allowing a single-dip operation for producing a suitable metal oxide layer.

Early attempts, for instance, to form colloidal tungstic acid obtained by adding hydrochloric acid to an alkaline sodium tungstate solution highlighted the different types of particles such as rectangular and hexagonal plates that can be formed. The colloidal phase, which was contaminated by sodium and chloride ions, was purified by dialysis and eventually the first-formed colloidal tungsten species produced insoluble hydrated tungsten oxide, WO₃.nH₂O (S.N. Chatterjee, J. Colloid Science, 1950, 13, 61, A. Chretien, W. Freundlich, Nouveau Traite Chim. Min., 1959, 14, 860). If acidification is effected by ion exchange in a proton-exchange resin, a transitory colloidal solution of tungstic acid species is formed free of contaminating ions. However, as noted before, the solution is stable for only a few hours before becoming turbid and finally yielding tungsten oxide hydrate (A. Chemseddine, M. Henry and J. Livage, Revue de Chimie Minerale, t.21, 1984, 487). Acidification of tungstate anions either in the presence or absence of interfering ions leads to the establishment of complex equilibria, consecutive and parallel reactions (D.L. Kepert and T.H. Kyle, J.

Chem. Soc., Dalton Trans., 1978, 133). More stable colloidal solutions of tungstic acid could be achieved by adding solvent (J. Lemerle and J. Lefebvre, Canadian J. Chem., 55 (1977) 3758).

Amorphous WO₃ layers obtained from such solutions containing colloidal tungstic acid species were shown to have good electrochromic properties (A. Chemseddine, R. Morineau, J. Livage, Brevet Francais, 1982, No. 8208934) but adhesion of the WO₃ layer to glass was considered to be inadequate (M.A. Aegerter, Sol-Gel Chromogenic Materials and Devices in Structure and Bonding, Vol.85, p.149, Springer-Verlag, Berlin, 1996).

Precipitated hydrated tungsten, oxide does not exhibit any photochromic or electrochromic properties (A. Chemseddine, R. Morineau and J. Livage, Solid State Ionics, 9 and 10 (1983) 357).

An alternative method of forming stable colloidal solutions of tungsten were disclosed in U.S. Patents Nos. 4,634,585 (1987), and 5,035,478 (1991).

Methods of producing polytungstic acid from tungsten carbide and tungsten metal respectively by dissolution in hydrogen peroxide and methods of forming useful WO₃ coatings from such precursors were described.

Recently, U.S. Patent No. 5,457,218 (1995), discloses a method of producing coating solutions containing colloidal metal derivatives. In this method, transition metals are allowed to react with hydrogen peroxides in the presence of an organic acid. Heating under reflux with ethanol then esterifies the resulting metal peroxyacids and the product is isolated as a powder. The resultant metal derivatives are dissolved in alcohol.to give stable colloidal dispersions of the corresponding metal (see also US-A-5 277 986).

During our investigations of the above procedure, we have found that the method affords stable solutions or peroxypolytungstate esters that produce high quality WO₃ layers for electrochromic applications. However, the procedure is unsuitable for production on a large scale since the reaction is extremely exothermic and it is difficult to maintain the required temperature regimen. Elaborate controls and expensive cooling equipment would be necessary to control the reaction temperature in the specified range of -10 to 12°C. Also, long reaction times of up to 30 hours are necessary for complete digestion at those temperatures.

Finally, U.S. Patent No. 5,772,978 (1998) discloses a method of making colloidal tungsten derivatives in which a freshly produced polytungstate solution is allowed to react with hydrogen peroxide. The polytungstate solution was derived from an acidified ammonium metatungstate solution that included species having the nominal formula (NH₄)₆H₂W₁₂O₄₀nH₂O or from acidified sodium tetraoxotungstate (VI) solution.

Although the reaction between the acidified tungstate solution and hydrogen peroxide is facile and immediate, the method suffers from the disadvantage of needing to use an ion-exchange resin to remove the sodium and ammonium cations. This would be a disadvantage in large-scale industrial applications because of the inconvenience and cost of regenerating the ion-exchange resins. Further, the use of readily available sodium tungstate for the same purpose presents problems since more concentrated solutions of polytungstic acids (e.g. 0.35M) derived from this material tend to become extremely viscous and gel within a short time. (E. Richardson, J. Inorg. Nucl. Chem., 1959, 12, 79).

Indeed, the above-mentioned authors of U.S. Patent No. 5,772,978 have stated that particular care must be taken before and during the peroxide treatment to avoid the formation of intractable gels or coagulated solids and hence more dilute tungstate salt solutions are preferably used.

Unexpectedly, we have found that readily available and inexpensive hydrated tungsten oxides, are easily dissolved in hydrogen peroxide alone or in mixtures with organic acids and alcohols to give stable colloidal solutions of peroxymetallic acids or peroxyester metal derivatives. These derivatives are easily dispersed in alcohol solutions that do not become excessively viscous or intractable. Although crystals of potassium oxalatooxodiperoxotungstate, K₂[WO(O₂)₂(C₂O₄)], have been synthesised from K₂WO₄, oxalic acid and H₂O₂ reaction products from tungstic acid solutions in the presence of hydrogen peroxide and lower carbon organic acids have not been isolated or characterised(R. Stomberg and S. Olson, Acta. Chem. Scand.,Ser. A, 39(1985) 79.

In particular, the novelty of dissolving a hydrated tungsten oxide, WO₃.nH₂O and other metal precursors such as MoO₃ to give stable colloidal solutions will be described.

### OBJECTIVES OF THE INVENTION

An object of the present invention is to provide improved methods for the production of peroxy and peroxyester tungsten derivatives, as well as to provide stable compositions of these derivatives in alcoholic solutions.

A further object of the present invention is to provide such solutions, which can be applied to glass surfaces either by dipping, spraying or spin-coating to form thin layers of the tungsten oxide coating after firing. It is also an objective of the invention to provide transparent coherent nanocrystalline layers of tungsten oxides with improved properties for use as electrodes in electrochromic devices.

### OUTLINE OF THE INVENTION

In one aspect, the invention relates to a process for producing a tungsten oxide precursor solution in which a peroxytungstic acid is converted to a stable peroxyester tungsten derivatives. Unlike prior-art methods, the present invention utilises readily available and relatively inexpensive hydrated metal oxides, to form peroxymetallic acids and peroxyester metal derivatives that afford colloidal solutions in ethanol. The stability of these materials is such that concentrated dispersions in alcohol solutions give good quality coatings on glass substrates after one application by one of three methods such as dipping, spraying or spin-coating. This invention is based upon the finding that relatively insoluble unreactive starting materials such as hydrated tungsten oxides, can be converted to stable colloidal dispersions of the tungsten derivatives in alcohol. In particular, we have found that water-insoluble, yellow, hydrated tungsten oxide, WO₃.H₂O, or tungstic acid dissolves readily either under reflux or when stirred at temperatures below 20° C with hydrogen peroxide. Often an admixture of hydrogen peroxide and organic acids are used to give intermediates which are easily dispersed in alcohol.

Unlike previous attempts to coat glass substrates with tungstic acid derived from acidified sodium tetraoxotungstate (VI) solutions, these modified tungstic acid derivatives are relatively easy to prepare, stable and adhere tenaciously to glass as well as having good electrochromic properties. The structure of these colloidal tungsten derivatives produced by these methods is unknown but they are formed under mild conditions and the starting material, WO₃.nH₂O, does not require any pretreatment. The process includes the step of treating hydrated tungsten oxide with hydrogen peroxide to form the peroxypolytungstate solution. In preferred embodiments, the hydrated tungsten oxide is treated with hydrogen peroxide in the presence of a lower-carbon organic acid or anhydride,to form colourless solutions of peroxyester tungsten derivatives. It was found that the addition of alcohol at this stage interferred with the dissolution of the tungstic acid and hence was omitted. The amount of peroxide preferably ranges from about 10 to 50 mol of hydrogen peroxide per mol of tungsten, more preferably from about 2 to about 10 mol of hydrogen peroxide per mol of tungsten. The amount of organic acid or anhydride, ranges from about 0.5 to 10 mol of acid or anhydride per mol of tungsten, more preferably from about 1 to 5 of acid or anhydride per mol of tungsten.

In another aspect, the invention relates to a process for producing tungsten oxide coatings from the peroxyester tungsten derivatives dissolved in alcohol.

An important application of this invention is the production of thin metal oxide films on glass that are used in electrochromic devices.

The invention provides a reliable and reproducible method for producing electrochromic tungsten oxide layers that are stable and can intercalate ions reversibly. It is interesting to note that, whereas the starting material is itself not electrochromic, the tungsten oxide derived from solutions made from this material displays good electrochromic properties.

It has been found that the molar ratio of the reactants, the sequence of addition of the reactants and the conditions during the drying stage before addition of solvent alcohol, all play a part in forming clear, stable and useful solutions for electrochromic purposes.

It was found, in particular, that tungsten precursors in solution can be modified by heating with catalytic amounts of strong acids such as trifluoroacetic, p-toluenesulfonic and triflic acid. Reflux periods of up to 1 hour have been used to produce satisfactory tungsten oxide precursor solutions. The solutions thus treated, give WO₃ layers, which are relatively thick, having good adhesion to glass and excellent electrochromic properties. Large amounts of water in precursor solutions ultimately hinders the de-intercalation of Li⁺ ions in the WO₃ coating and hence full bleaching is not achieved. Preferably, the precursor solutions are substantially free of water and at most contain from 2 to 10%.

A typical procedure for forming a transparent metal oxide coating on glass will be:
(i) evaporating under controlled conditions of pressure and temperature the solvent and excess reagents from the peroxy and/or peroxyester metal derivatives to form a solid;
(ii) dissolving or dispersing the solid in a solvent alcohol to form a solution;
(iii) heating the alcoholic solution under reflux with or without the addition of catalytic amounts of strong organic acids to effect a stable, colloidal metal oxide solution.
(iv) applying the precursor solution to the glass as a thin film either by spraying or dip coating;
(v) drying the film releasing excess alcohol to form a solidified coating
(vi) baking the glass and the film to form a transparent metal oxide coating. The heating is carried out in the range from about 100°C to about 350°C and more preferably from about 150°C to 250°C.

A number of hydrated metal acetates such as cobalt, or nickel, are useful as dopants and can be added to hydrated tungsten oxide or molybdenum oxide at the beginning of the reaction. The invention will now be described by way of the following examples.

### DESCRIPTION OF EXAMPLES

### Example 1

Hydrogen peroxide, H₂O₂, (30% w/v, 21cm³, 0.185mol) was added to tungstic acid, WO₃.nH₂O, (2.50g, 0.010mol) and the suspension heated to reflux. The intense canary yellow colour of W03.nH20 was observed to fade during the ensuing reaction, resulting in a colourless colloidal solution. After a reflux period of 30min, the excess peroxide solution was removed by heating (70°C) under reduced pressure (ca. 10mmHg) to yield a powdery lemon yellow solid. The addition of dry ethanol (20cm³) initially resulted in the formation of a milky white suspension, however after heating under reflux for 30min, a pale yellow colloidal solution was formed.

Reactions performed using larger or smaller quantities of H₂O₂ were also successful, although there was some variance in the turbidity of the resulting solutions.

### Example 2

To a colloidal solution formed as in example 1 was added p-toluenesulfonic acid CH₃C₆H₄SO₃.H₂O (0.04g, 0.2mmol) and the mixture heated under reflux for 1h. The resulting solution was darker in colour and more turbid than the original solution. Increased turbidity was also observed on addition of other acids such as actetic trifluoroacetic or triflic acid.

### Example 3

To WO₃.nH₂O (2.50g, 0.010mol) was added H₂O₂, (30% w/v, 21cm³, 0.185mol) and acetic acid, CH₃COOH (0.6cm³, 0.010mol) and the suspension heated under reflux for 30min. Volatile material was then removed by heating under vacuum to yield a powdery lemon yellow solid. The milky white suspension formed on addition of ethanol (20cm³) was transformed to a pale yellow coloured colloidal solution after heating under reflux for 30min.

### Example 4

To WO₃.nH₂O (2.50g, 0.010mol) was added H₂O₂, (30%w/v, 21cm³, 0.185mol), CH₃COOH (0.6cm³, 0.010mol) and ethanol (10cm³, 0.10mol) and the mixture heated under reflux for 30min. The resulting colourless solution was more turbid than those of the previous examples. Increasing the reflux period did little to improve this. Excess reactants were removed by heating under vacuum to yield a lemon-coloured residue. The addition of dry ethanol (20cm³) initially resulted in the formation of a milky white suspension, however after heating under reflux for 30min, a cloudy pale yellow solution was formed. Reactions performed with varying mol ratios of reactants were also successful, although there was some variance in the turbidity of the resulting solutions.

### Example 5

To WO₃.nH₂O (2.50g, 0.010mol) was added H₂O₂, (30%w/v,21cm³, 0.184mol) and acetic anhydride, (CH₃CO₂)₂O, (1cm³, 0.010mol) and the suspension heated to reflux. Volatile material was then removed by heating under vacuum to yield a lemon-coloured residue. The addition of dry ethanol (20cm³) initially resulted in the formation of a milky white suspension, however after heating under reflux for 30min, a pale yellow colloidal solution was observed.

### Example 6

To white molybdenum oxide, MoO₃ (1.4g, 0.01 mol) was added 95% ethanol (20cm³), H₂O₂ (30%w/v, 10cm³, 0.09mol) and acetic acid (3.0g, 0.05mol) and the mixture was heated under reflux for about 1 h to give a strongly yellow coloured solution with traces of undissolved white MoO₃. Only partial dissolution was achieved if less acetic acid was used.

### Example 7

Nickel acetate tetrahydrate (2.48g, 0.01 mol) was dissolved in H₂O₂ (30%w/v, 10g, 0.09mol) and 95% ethanol (20cm³) added. On gentle heating, an evolution of gas took place and a clear light green solution formed. To this solution was added WO₃nH₂O (2.50g,0.01 mol) and heating was continued under reflux for 30min, the volatile material was removed under vacuum to give a pale green solid that dissolves readily in wet alcohol.

### Example 8

To hydrated tungsten oxide (2.5g, 0.01mol) was added nickel acetate tetrahydrate (0.74g, 0.003mol) and H₂O₂ (30%w/v, 21cm³, 0.185mol). A reaction took place to give a green transparent solution which was slightly turbid.

### Example 9

To WO₃.H₂O(10g,0.04mol) was added H₂O₂(30%w/v, 120 cm³, 1.06mol) and acetic anhydride(1.4g,0.01mol) and the suspension was stirred at 15°C in a controlled-temperature water bath for about 50 hours. A clear solution with a trace of insoluble white material was filtered through "Celite" to give a clear colourless solution. On evaporation of excess peroxide and water a yellow powder was formed. Heating the yellow powder under reflux with ethanol(100cm³) for about 30 minutes resulted in a clear yellow coloured colloidal alcohol solution. This solution was used for coating glass to form tungsten oxide layers after heating to 250°C. The results show that satisfactory layers are produced in which the contrast ratio is about 3.0.(The contrast ratio is the ratio of the light transmittance of the WO₃ layer between its bleached and charged state. The wavelength of radiation employed was 670A and the applied charge was 15mC).

## Claims

1. A method for preparing peroxyester tungsten derivatives **characterised in that** hydrated tungsten oxides are allowed to react with a peroxide at a specified temperature and a lower carbon organic acid or anhydride to form reaction products that include peroxy tungstic acid and peroxyester tungsten derivatives.

2. A method according to claim 1 wherein:
said hydrated tungsten oxide and hydrogen peroxide are first allowed to react to form a first reaction product consisting of peroxy tungstic acid derivative;
said peroxy tungstic acid derivatives in a solution of peroxide and water are allowed to react with said lower-carbon organic acid or anhydride whilst heated under reflux to generate said peroxyester metal derivatives,

3. A method according to claim 1 wherein;
said hydrated tungsten oxide is allowed to react with a mixture of peroxide, lower-carbon organic acids or anhydrides to generate said peroxyester metal derivates.

4. A method according to claim 1 wherein;
said peroxide is added in excess of that required by stoichiometry such that the amount of peroxide preferably ranges from about 10 to 50 mol of hydrogen peroxide per mol of tungsten, more preferably from about 2 to 10 mol of hydrogen peroxide per mol of tungsten;
said lower-carbon organic acids or anhydrides are added in stoichiometric amounts or in excess of that required by stoichiometry to convert peroxy bonds to peroxyester bonds such that the mol ratio of organic acid or anhydride to tungsten oxide is in the range 0.5 to 20, preferably 1 to 10.

5. A method according to any preceding claim including the step of removing excess said peroxide,said organic acid or anhydride by evaporation under vacuum to generate a paie yellow solid which dissolves in alcohol;
said pale yellow solid is either a peroxy tungstic acid derivative or peroxyester metal derivative or an admixture of both.

6. A method according to any preceding claim wherein:
said hydrated tungsten oxide is a compound of formula WO₃.nH₂O where n can vary in value between 1/10 to 5 preferably between 1/3 to 2
said peroxide is hydrogen peroxide of strength between 10-50% preferably 25-30%
said specified temperature can vary in range from reflux temperature to 5°C, preferably from 10-20°C
said organic acid is selected from a group comprising branched or straight-chain acids with 1-8 carbon atoms, preferably acetic acid
said anhydride is selected from acetic anhydride, proprionic anhydride.
said alcohol solvent is ethanol

7. A method for preparing a precursor solution for use in forming a transparent tungsten oxide coating on glass, said method including the step of dissolving the isolated reaction product of any of the preceeding claims in an alcohol, at about 25°C or under reflux; said reaction product comprises peroxyester tungsten derivative;
said reflux period is in the range of 10 to 60 minutes.

8. A method for preparing a precursor solution for use in forming a transparent tungsten oxide coating on glass for use in the manufacture of an electrochromic device, said method comprising the following steps:
dissolving hydrated tungsten oxide in an admixture of hydrogen peroxide, acetic acid or acetic anhydride to generate a first reaction product including peroxy tungsten derivatives in a water solvent
removing the excess water, hydrogen peoxide and other reagents by evaporation under vacuum to form a solid yellow powder of peroxyester tungsten derivative
dissolving said solid yellow powder of peroxyester tungsten derivative in ethanol to form precursor solution by heating under reflux to effect the complete dissolution of the solid and convert it to a colloidal solution.

9. A method of forming a tungsten oxide film on glass comprising the steps according to claim 8 and
applying said precursor solution to a glass substrate by dipping or spraying and allowing it to dry to form a thin coherent colloidal layer of peroxyester metal derivative
heating said coherent colloidal layer to decompose peroxyester metal derivative to the metal oxide and to form a layer of metal oxide on the substrate

10. A method according to any preceeding claim wherein;
said hydrated tungsten oxide is doped with one or more metal ions;
and the precursor solution comprises an admixture or a reaction product of the corresponding peroxyester metal derivatives
said metal ions are selected from a group consisting of Ni Co Mo

## Patentansprüche

1. Verfahren zur Herstellung von Wolframperoxyester-Derivaten, **dadurch gekennzeichnet, dass** hydratisierte Wolframoxide mit einem Peroxid bei einer spezifizierten Temperatur und einer niederen organischen Carbonsäure oder einem niederen organischen Carbonsäureanhydrid zur Reaktion gebracht werden, um Reaktionsprodukte zu bilden, die Wolframperoxysäure und Wolframperoxyester-Derivate beinhalten.

2. Verfahren nach Anspruch 1, in dem
zuerst das hydratisierte Wolframoxid und Wasserstoffperoxid zur Reaktion gebracht werden, um ein erstes Reaktionsprodukt bestehend aus Wolframperoxysäure-Derivat zu bilden;
dass die Wolframperoxysäure-Derivate in einer Lösung von Peroxid und Wasser mit der niederen organischen Carbonsäure oder dem niederen organischen Carbonsäureanhydrid zur Reaktion gebracht werden, während unter Rückfluss erhitzt wird, um die Metallperoxyester-Derivate zu erzeugen.

3. Verfahren nach Anspruch 1, in dem
das hydratisierte Wolframoxid mit einer Mischung aus Peroxid, niederen organischen Carbonsäuren oder niederen organischen Carbonsäureanhydriden zur Reaktion gebracht wird, um die Metallperoxyester-Derivate zu erzeugen.

4. Verfahren nach Anspruch 1, in dem
das Peroxid im Überschuss zur stöchiometrisch benötigten Menge hinzugefügt wird, so dass die Menge an Peroxid bevorzugt im Bereich von ca. 10 bis 50 Mol Wasserstoffperoxid pro Mol Wolfram, bevorzugter im Bereich von ca. 2 bis 10 Mol Wasserstoffperoxid pro Mol Wolfram liegt;
die niederen organischen Carbonsäuren oder die niederen organischen Carbonsäureanhydride in stöchiometrischen Mengen oder im Überschuss zur stöchiometrisch benötigten Menge hinzugefügt werden, um Peroxy-Bindungen in Peroxyester-Bindungen umzuwandeln, so dass das Mol-Verhältnis der organischen Säure oder des organischen Anhydrides zu Wolframoxid im Bereich von 0.5 bis 20, vorzugsweise 1 bis 10, liegt.

5. Verfahren nach einem der vorangehenden Ansprüche beinhaltend den Schritt, dass der Überschuss an Peroxid, organischer Säure oder organischem Anhydrid durch Verdampfung unter Vakuum entfernt wird, um einen hellgelben Feststoff zu erzeugen, der sich in Alkohol auflöst;
der hellgelbe Feststoff entweder ein Wolframperoxysäure-Derivat oder Metallperoxyester-Derivat oder eine Mischung von beiden ist.

6. Verfahren nach einem der vorangehenden Ansprüche, in dem:
das hydratisierte Wolframoxid eine Verbindung der Formel WO₃.nH₂O ist, in dem n innerhalb eines Wertes zwischen 1/10 bis 5, vorzugsweise zwischen 1/3 bis 2 variieren kann,
das Peroxid Wasserstoffperoxid mit einer Stärke zwischen 10-50%, vorzugsweise 25-30%, ist,
die spezifizierte Temperatur im Bereich der Rückflusstemperatur bis zu 5°C, vorzugsweise von 10 bis 20°C, variieren kann,
die organische Säure ausgewählt ist aus einer Gruppe beinhaltend verzweigte oder geradkettige Säuren mit 1 bis 8 Kohlenstoffatomen, vorzugsweise Essigsäure,
das Anhydrid ausgewählt ist aus Essigsäureanhydrid, Proprionsäureanhydrid,
das Alkohollösungsmittel Ethanol ist.

7. Verfahren zur Herstellung einer Vorläuferlösung zur Verwendung in der Bildung einer transparenten Wolframoxid-Beschichtung auf Glas, wobei das Verfahren den Schritt beinhaltet, dass das isolierte Reaktionsprodukt irgendeines der vorangehenden Ansprüche in einem Alkohol bei ca. 25°C oder unter Rückfluss aufgelöst wird; das Reaktionsprodukt Wolframperoxyester-Derivat umfasst;
die Rückflussdauer im Bereich von 10 bis 60 Minuten ist.

8. Verfahren zur Herstellung einer Vorläuferlösung zur Verwendung in der Bildung einer transparenten Wolframoxid-Beschichtung auf Glas zur Verwendung in der Herstellung einer Elektrochrom-Vorrichtung, wobei die Methode die folgenden Schritte beinhaltet:
dass hydratisiertes Wolframoxid in einer Mischung aus Wasserstoffperoxid, Essigsäure oder Essigsäureanhydrid aufgelöst wird, um ein erstes Reaktionsprodukt einschliesslich Wolframperoxy-Derivate in einem Wasserlösungsmittel zu erzeugen,
dass der Überschuss an Wasser, Wasserstoffperoxid und weiteren Reagenzien durch Verdampfung unter Vakuum entfernt wird, um ein festes grünes Pulver aus Wolframperoxyester-Derivat zu erzeugen,
dass das feste grüne Pulver aus Wolframperoxyester-Derivat in Ethanol aufgelöst wird, um eine Vorläuferlösung zu bilden, indem unter Rückfluss erhitzt wird, um die vollständige Auflösung des Feststoffes zu erwirken und ihn in eine kolloidale Lösung umzuwandeln.

9. Verfahren zur Bildung eines Wolframoxidfilms auf Glas beinhaltend die Schritte nach Anspruch 8 und
das Auftragen der Vorläuferlösung auf ein Glassubstrat durch Tauchen oder Besprühen und das Trocknenlassen, um eine dünne, durchgehende, kolloidale Schicht aus Metallperoxy-Derivat zu bilden,
das Erhitzen der durchgehenden, kolloidalen Schicht, um Metallperoxyester-Derivate zum Metalloxid zu zerlegen und um eine Schicht aus Metalloxid auf dem Substrat zu bilden.

10. Verfahren nach einem der vorangehenden Ansprüche, in dem
das hydratisierte Wolframoxid mit einem oder mehreren Metallionen dotiert wird;
und die Vorläuferlösung eine Mischung oder ein Reaktionsprodukt der entsprechenden Metallperoxyester-Derivate enthält,
die Metalle ausgewählt sind aus der Gruppe bestehend aus Ni, Co, Mo.

## Revendications

1. Procédé de préparation de dérivés peroxyester de tungstène **caractérisé en ce que** des oxydes de tungstène hydraté sont mis à réagir avec un peroxyde à une température donnée et un anhydride ou un acide organique de carbone inférieur pour former des produits réactionnels qui comprennent des dérives peroxy d'acide tungstique et peroxyester de tungstène.

2. Procédé selon la revendication 1 dans lequel :
lesdits oxyde de tungstène hydraté et peroxyde d'hydrogène sont d'abord mis à réagir pour former un premier produit réactionnel consistant en un dérivé peroxy d'acide tungstique ;
lesdits dérivés peroxy d'acide tungstique dans une solution de peroxyde et d'eau sont mis à réagir avec ledit anhydride ou acide organique de carbone inférieur tout en étant chauffée à reflux pour générer lesdits dérivés peroxyester de métal.

3. Procédé selon la revendication 1 dans lequel :
ledit oxyde de tungstène hydraté est mis à réagir avec un mélange de peroxyde, d'anhydrides ou d'acides organiques de carbone inférieur pour générer lesdits dérivés peroxyester de métal.

4. Procédé selon la revendication 1 dans lequel :
ledit peroxyde est ajouté en excès de ce qui est requis par stoechiométrie de telle sorte que la quantité de peroxyde va de préférence d'environ 10 à 50 mol de peroxyde d'hydrogène par mole de tungstène, plus préférentiellement d'environ 2 à 10 mol de peroxyde d'hydrogène par mole de tungstène ;
lesdits anhydrides ou acides organiques de carbone inférieur sont ajoutés en quantités stoechiométriques ou en excès de ce qui est requis par stoechiométrie pour convertir des liaisons peroxy en liaisons peroxyester de telle sorte que le rapport molaire de l'anhydride ou de l'acide organique sur l'oxyde de tungstène va de 0,5 à 20, de préférence de 1 à 10.

5. Procédé selon l'une quelconque des revendications précédentes comprenant l'étape d'élimination de l'excès dudit peroxyde, dudit anhydride ou acide organique par évaporation sous vide pour générer un solide jaune pâle soluble dans l'alcool ;
ledit solide jaune pâle étant soit un dérivé peroxy d'acide tungstique ou un dérivé peroxyester de métal ou un mélange des deux.

6. Procédé selon l'une quelconque des revendications précédentes dans lequel :
ledit oxyde de tungstène hydraté est un composé de formule WO₃,nH₂O où n peut varier de 1/10 à 5, de préférence de 1/3 à 2,
ledit peroxyde est du peroxyde d'hydrogène de force comprise entre 10 et 50 %, de préférence entre 25 et 30 %,
ladite température donnée peut varier de la température de reflux à 5°C, de préférence de 10 à 20°C,
ledit acide organique est choisi dans un groupe comprenant des acides à chaînes linéaires ou ramifiés comportant de 1 à 8 atomes de carbone, de préférence l'acide acétique,
ledit anhydride est choisi à partir de l'anhydride acétique, de l'anhydride proprionique,
ledit solvant alcoolique est de l'éthanol.

7. Procédé de préparation d'une solution précurseur à utiliser pour former un revêtement d'oxyde de tungstène transparent sur du verre, ledit procédé comprenant l'étape de dissolution du produit réactionnel isolé de l'une quelconque des revendications précédentes dans un alcool, à environ 25°C ou à reflux ;
ledit produit réactionnel comprenant un dérivé peroxyester de tungstène ;
ladite période de reflux étant dans la gamme de 10 à 60 minutes.

8. Procédé de préparation d'une solution précurseur à utiliser pour former un revêtement d'oxyde de tungstène transparent sur du verre à utiliser dans la fabrication d'un dispositif électrochromique, ledit procédé comprenant les étapes suivantes :
dissolution de l'oxyde de tungstène hydraté dans un mélange de peroxyde d'hydrogène, d'acide acétique ou d'anhydride acétique pour générer un premier produit réactionnel comprenant des dérivés peroxy de tungstène dans un solvant hydrique ;
élimination de l'excès d'eau, de peroxyde d'hydrogène et d'autres réactifs par évaporation sous vide pour former une poudre solide jaune de dérivé peroxyester de tungstène ;
dissolution de ladite poudre solide jaune de dérivé peroxyester de tungstène dans de l'éthanol pour former une solution précurseur en chauffant à reflux pour aboutir à la dissolution complète du solide et le convertir en une solution colloïdale.

9. Procédé de formation d'un film d'oxyde de tungstène sur du verre comprenant les étapes selon la revendication 8 et,
l'application de ladite solution précurseur sur un substrat en verre par trempage ou par vaporisation et la laisser sécher pour qu'elle forme une mince couche colloïdale cohérente de dérivé peroxyester de métal;
le chauffage de ladite couche colloïdale cohérente pour décomposer le dérivé peroxyester de métal en oxyde de métal et former une couche d'oxyde de métal sur le substrat.

10. Procédé selon l'une quelconque des revendications précédentes dans lequel :
ledit oxyde de tungstène hydraté est dopé avec un ou plusieurs ions métalliques ;
et la solution précurseur comprend un mélange ou un produit réactionnel des dérivés peroxyester de métal correspondants ;
lesdits ions métalliques sont choisis dans un groupe constitué par les éléments Ni, Co, Mo.
